# EUROPÄISCHE PATENTSCHRIFT

(11) **EP 2 164 693 B1**
(45) Veröffentlichungstag und Bekanntmachung des Hinweises auf die Patenterteilung: **29.11.2017**
(21) Anmeldenummer: 08773910.8
(22) Anmeldetag: 08.07.2008
(51) Int. Cl.: B29C 45/14

(54) **VERFAHREN ZUR HERSTELLUNG VON HINTERSPRITZBAREN FOLIEN UND LAMINATEN**
METHOD OF MAKING INSERT MOLDING FOILS AND LAMINATES
PROCÉDÉ DE FABRICATION DES FEUILLES ET LAMINÉS AU MOULAGE PAR INSERTION

(30) Priorität: 13.07.2007 EP 07013760
(43) Veröffentlichungstag der Anmeldung: 24.03.2010
(73) Patentinhaber: Hueck Folien GmbH, 4342 Baumgartenberg (AT)
(72) Erfinder: BERGSMANN, Martin, A-4020 Linz (AT); AIGNER, Johann, A-4352 Klam (AT); BERGER, Markus, 95326 Kulmbach (DE); LINDMEIR, Thomas, A-4224 Wartberg ob der Aist (AT); LEONHARTSBERGER, Johann Georg, A-4222 Luftenberg (AT)
(74) Vertreter: Landgraf, Elvira
(86) Internationale Anmeldenummer: PCT/EP2008/005541
(87) Internationale Veröffentlichungsnummer: WO 2009/010206

(56) Entgegenhaltungen:
- EP-A- 1 304 173
- EP-A- 1 405 707
- WO-A-98/51516
- WO-A-2006/092346
- DE-A1- 2 009 819
- DE-A1- 2 814 666
- DE-U1- 29 604 910
- FR-A- 2 582 984
- JP-A- 6 314 895
- US-A- 3 839 129
- US-A1- 2002 071 940

## Beschreibung

Die Erfindung betrifft beschichtete verformbare Folien und bahnförmige Laminate, die mit Kunststoff hinterspritzt werden können.

Dekorativ veredelte Kunststoffspritzgussteile werden beispielsweise in der Autoindustrie, in der Architektur, für Haushaltsgeräte, Spielwaren, Sportartikel und sonstige Gebrauchsgegenstände eingesetzt.

Üblicherweise werden dekorative Folien auf Kunststoffspritzgussformlingen durch Heißprägefolien oder Transferfolien gebildet, die mit einer Schutzfolie versehen sein können. Nach dem Verformen der Folien muss die Schutzfolie abgezogen werden, dann können diese Folien hinterspritzt werden. Weiters können nicht transferierte Dekorfolien eingesetzt werden die zum Beispiel aus einem Metallkunststoffverband bestehen.

Insbesondere naturgetreue Metalldekore sind jedoch mit dieser Art von Folien nicht herstellbar.

Bekannte Metall-Kunststoff-Verbundkörper werden insbesondere dort eingesetzt, wo ein niedriges Eigengewicht angestrebt wird. Der Spritzgießprozess ermöglicht dabei die Herstellung komplex geformter Kunststoffteile mit Hinterschneidungen, variablen Wanddicken oder Stegansätzen, so dass ein solches Kunststoffträgerteil verschiedene Funktionen des Verbundkörpers übernehmen kann. Hinsichtlich ihres Aussehens erfüllen Kunststoffkörper in der Regel nicht die hohen Anforderungen, die an eine dekorative Oberfläche gestellt werden. Für Zierteile werden Kunststoffkörper daher mit entsprechenden Dekoren an den sichtbaren Oberflächen versehen. So werden beispielsweise beim Spritzgießen durch Einlegen von bereits dekorierten, umgeformten und beschnittenen Blechhalbzeugen in das Spritzgusswerkzeug dekorative Verbundbauteile hergestellt. Die dekorierten Blechteile bilden am fertigen Bauteil die optische Oberfläche, welche einfarbig, mit Metallic-Effekt, bis hin zu mehrfarbigen Dekoren und mit zusätzlichen Symbolen ausgeführt sein kann. Die Dekorschicht wird durch ein vorheriges Bedrucken des Blechteils erhalten. Nachteilig bei dem bekannten Verfahren ist, dass die Dekorschicht beim Hinterspritzen leicht beschädigt wird. Darüber hinaus erfüllen Metall-Kunststoff-Verbundkörper nicht die zusätzlichen Anforderungen hinsichtlich der UV-Beständigkeit und Korrosionsbeständigkeit, die an Zierteile im Außenbereich, insbesondere bei Kraftfahrzeugen, gestellt werden.

Aus DE 199 34 545 C1 ist ein Verfahren zur Herstellung eines Metall-Kunststoff-Verbundteils offenbart. Hierbei wird durch Spritzgießen ein Formschluss zwischen dem Kunststoff und einer vorbehandelten Metallplatine erzielt. Nachteilig an einem solchen Verfahren ist die unzureichende Verbundfestigkeit zwischen dem Metall und dem Kunststoff und die Notwendigkeit entsprechende Hinterschneidungen für den Formschluss vorzusehen.

Eine hinterschneidungsfreie Ausgestaltung der Verbindung zwischen Metallkomponente und Kunststoffkomponente zeigt die deutsche Offenlegungsschrift DE 103 46 097 A1. Hier wird eine Verbindung zwischen Metallkomponente und Kunststoffkomponente mittels eines Haftvermittlers erzielt. Der Haftvermittler wird vor dem Hinterspritzen aufgetragen und durch Erwärmen der Metallkomponente nach dem Spritzgießen aktiviert. Diese Erwärmung kann mittels Induktion oder Widerstandsheizen erfolgen, z. B. indem das gespritzte Verbundteil dem Spritzgusswerkzeug entnommen wird und durch eine Induktionsspule geführt wird. Dieser Vorgang funktioniert nur reibungslos, wenn bereits eine Formschlussverbindung zwischen dem Blechteil und dem Kunststoffmaterial besteht. Darüber hinaus ist kein Verfahren zur Herstellung eines Zierteils gezeigt.

Zierteile aus einem Metall-Kunststoff-Verbundkörper und ein Verfahren zu deren Herstellung werden in der deutschen Offenlegungsschrift DE 199 14 092 A1 beschrieben. Hierzu werden mit einer dekorativen Oberfläche versehene Blechteile, die rückseitig mit einer Kopplungsschicht beschichtet sind, in ein Spritzgusswerkzeug eingelegt und mit einem duroplastischen Kunststoff hinterspritzt. Nachteilig bei diesem Verfahren ist, dass ausschließlich Zierteile für den Innenbereich erzielt werden können, an die keine hohen Anforderungen hinsichtlich der Korrosionsbeständigkeit und UV-Beständigkeit gestellt werden können.

Aus der DE 20 2005 010946 U ist ein dekoratives Zierteil bestehend aus einem Kunststoff-Metall-Verbundkörper, bei dem ein dünnes Metall-Blechteil den dekorativen Bereich der Oberfläche des Verbundkörpers bildet und ein aus Kunststoff hergestelltes Teil als funktionales Trägerteil des Verbundkörpers dient, bekannt, wobei das Metall-Blechteil aus Aluminium und/ oder einer Aluminiumlegierung gebildet ist, dessen Innenseite mit dem KunststoffTrägerteil verbunden ist und dessen Außenseite eine Oberfläche besitzt, die ein dekoratives, metallisch wirkendes Aussehen aufweist und verdichtet ist, das Kunststoffteil aus einem wärmebeständigen Kunststoff besteht und eine alterungsbeständige stoffschlüssige Verbindung zwischen dem Metall-Blechteil und dem Kunststoff besteht, die durch Aktivierung eines wärme- und chemikalienbeständigen Haftvermittlers vor dem Hinterspritzen und durch Reaktion des Haftvermittlers beim Herstellen des Verbundes durch Hinterspritzen sowie durch Reaktion des Haftvermittlers bei der nachfolgenden chemischen Oberflächenbehandlung bewirkt worden ist.

US 2002/0071940 A1 offenbart ein Verfahren zur Herstellung von Spritzgussteilen, wobei das Substrat zuerst in die gewünschte Form gebracht wird, und anschließend auf wenigstens eine Seite des Substrats eine dekorative Schicht aufgebracht wird. Auf mindestens einer Seite dieses Verbunds wird eine metallische Schicht aufgebracht.

Die metallische Schicht soll dabei als Schutzschicht gegen elektromagnetische Interferenzen dienen.

Aufgabe der Erfindung war es, direktdekorierte verformbare bzw. bahnförmige Laminate bereitzustellen, die hinterspritzt werden können und originalgetreue Metalldekore aufweisen.

Gegenstand der Erfindung sind daher hinterspritzbare Folien bzw. bahnförmige Laminate nach Anspruch 1. Die Erfindung betrifft ebenfalls die Verwendung der hergestellten Folien oder Laminate nach Anspruch 7 oder 8.

Weitere Ausführungen der Erfindung sind Gegenstand der abhängigen Ansprüche. Die Dekorfolie kann vorzugsweise aus PMMA, PC, PS, PET, oder ABS, PP, PU bestehen. Diese Folien können strukturiert sein beispielsweise geprägt, gebürstet, mechanisch bearbeitet oder geschliffen sein.

Die Dicke der Dekorfolie beträgt etwa 6 bis 500 µm.

Die Trägerfolie kann aus gleichem oder unterschiedlichem Material bestehen wie die Dekorfolie, wobei das Material der Trägerfolie an das zu hinterspritzende Grundmaterial angepasst ist. Besonders geeignet sind Kunststofffolien wie PMMA, PC, PS, PET oder ABS, PP, PU.

Die Dicke der Trägerfolie beträgt etwa 50 - 800 µm, vorzugsweise 150 - 500 µm.

Die Dekorfolie, oder die Trägerfolie selbst wird beispielsweise mit einer metallischen Beschichtung versehen, die vollflächig oder partiell aufgebracht sein kann.

Die Folie wird dazu vorerst mittels eines Inline-Plasma- (Niederdruck- oder Atmosphärenplasma-), Corona- oder Flammprozesses behandelt. Durch energiereiches Plasma wird die Oberfläche gereinigt.

Gleichzeitig wird die Oberfläche aktiviert. Dabei werden endständige polare Gruppen an der Oberfläche erzeugt. Dadurch wird die Haftung von Metallen und dergleichen an der Oberfläche verbessert.

Gegebenenfalls kann gleichzeitig mit der Anwendung der Plasma- bzw. Corona- oder Flammbehandlung eine dünne Metall- oder Metalloxidschicht als Haftvermittler, beispielsweise durch Sputtern oder Aufdampfen aufgebracht werden. Besonders geeignet sind dabei Cr, Al, Ag, Ti, Cu, TiO₂, Si-Oxide oder Chromoxide. Diese Haftvermittlerschicht weist im allgemeinen eine Dicke von 0,1 nm - 10 nm, vorzugsweise 0,2 nm - 2 nm, besonders bevorzugt 0,2 bis 1 nm auf.

Dadurch wird die Haftung der partiell oder vollflächig aufgebrachten gegebenenfalls strukturierten metallischen Schicht weiter verbessert. Das ist Voraussetzung für die Erzeugung von metallischen, funktionellen oder dekorativen Schichten mit hoher Präzision und guter Haftung.

Anschließend wird die eigentliche dekorative Schicht aufgebracht. Die dekorative Schicht kann zusätzlich funktionelle Eigenschaften aufweisen zum Beispiel: elektrische Leitfähigkeit, magnetische oder elektrostatische Eigenschaften. Diese Schicht besteht aus einem Metall, einer Metallverbindung,oder einer Legierung. Als Metallschicht sind Schichten aus Al, Cu, Fe, Ag, Au, Cr, Ni, Zn, Pd, Pt, Sn und dergleichen geeignet. Als Metallverbindungen sind beispielsweise Oxide oder Sulfide von Metallen, insbesondere TiO₂, Cr-Oxide, ZnS, ITO, ATO, FTO, ZnO, Al₂O₃ oder Siliciumoxide geeignet. Geeignete Legierungen sind beispielsweise Cu-Al Legierungen, Cu-Zn Legierungen und dergleichen.

Diese Schicht kann durch bekannte Verfahren, beispielsweise durch Bedampfen, Sputtern, Walzenauftragsverfahren, Drucken (Tief-, Flexo-, Sieb-, Digitaldruck und dergleichen), Sprühen, Galvanisieren und dergleichen aufgebracht werden. Insbesondere wird die Schicht erfindungsgemäß durch ein PVD- oder CVD-Verfahren aufgebracht.

Eine partielle Metallisierung kann durch partielle Metallisierungsverfahren, wie partiellen Auftrag einer hochpigmentierten Farbe vor dem Metallisierungsvorgang und Ablösen dieser Farbschicht gemeinsam mit der darauf aufgebrachten Metallschicht, durch Verwendung einer Maske, durch Ätzvorgänge oder Laserabtrag und dergleichen erfolgen.

Ferner können auch andere Schichten mit optischen oder optisch aktiven Eigenschaften aufgebracht sein.

Die optischen Eigenschaften der Schicht lassen sich durch sichtbare Farbstoffe bzw. Pigmente, lumineszierende Farbstoffe bzw. Pigmente, die im sichtbaren, im UV-Bereich oder im IR-Bereich fluoreszieren bzw. phosphoreszieren, Effektpigmente, wie Flüssigkristalle, Perlglanz, Bronzen und/oder Multilayer-Farbumschlagpigmente und wärmeempfindliche Farben bzw. Pigmente beeinflussen. Diese sind in allen möglichen Kombinationen einsetzbar. Zusätzlich können auch beispielsweise phosphoreszierende Pigmente allein oder in Kombination mit anderen Farbstoffen und/oder Pigmenten eingesetzt werden.

Die erforderliche Duktilität wird durch Strukturierung der metallischen Schicht erreicht, d.h. die Dicke der Metallschicht wird auf die gewünschte Verformung und an das gewünschte Design angepasst.

Die Schichtdicke kann dabei dann so gewählt werden, dass definierte Lichttransmission möglich ist. Dadurch können die Folien bzw. Laminate hinterleuchtbar oder durchleuchtbar gestaltet werden.

Es ist jedoch auch möglich eine opake, völlig deckende Metallschicht aufzubringen, durch die keine Lichttransmission erfolgen kann.

Die Schichtdicke der metallischen Schicht (Gradient, Stufen) kann innerhalb der Dekorschicht variieren.

In einer Ausführungsform werden Trägerfolie und Dekorfolie miteinander durch ein Klebesystem, das für den Verbund aus thermoplastischen Folien und duroplastischen Folien entwickelt wurde, verbunden.

Das Klebesystem ist vorzugsweise ein 2-Komponenten-Klebesystem.

Dadurch hält der Laminatverbund chemischen und physikalischen Beanspruchungen stand.

Die metallisierte Dekorfolie bzw. die Trägerfolie wird mit einem bedruckfähigen Hardcoat - (Schutzlack)überzug versehen. Dieser Schutzlack besteht vorzugsweise aus einer Mischung aus einer UV- oder thermisch vernetzbaren Acrylat/Polyurethanmischung.

Der Schutzlack ist bedruckbar und kann in einem üblichen Druckverfahren, beispielsweise im Tief-, Siebdruck oder Tampondruck mit einer geeigneten gewünschten Bedruckung versehen werden.

Die Folie bzw. der Folienverbund wird durch Pressformen in die entsprechende Form gebracht, wobei Kaltpress- oder Warmpressverfahren angewendet werden können.

Diese Vorformlinge werden anschließend ausgestanzt oder ausgeschnitten (mechanisch oder durch Laser). Die so erzeugten Stanzteile werden in eine Spritzgießform eingelegt und auf bekannte Weise hinterspritzt.

Die erfindungsgemäßen Folien können für Gebrauchsgegenstände, Haushaltsgeräte, Spielwaren, Sportartikel, für Kfz-Teile und dergleichen eingesetzt werden.

Die Folien weisen eine hohe Korrosions- und UV-Beständigkeit auf und können beispielsweise auch Zierteile, die galvanisch hergestellt werden ersetzen.

## Patentansprüche

1. Verfahren zur Herstellung von hinterspritzbaren Folien oder Laminaten, **dadurch gekennzeichnet, dass** auf eine Kunststofffolie eine partielle oder vollflächige metallische Beschichtung mittels eines PVD- oder CVD-Verfahrens aufgebracht wird, wobei die metallische Beschichtung eine variable Dicke aufweist, anschließendes Aufbringen einer UV-vernetzbaren Schutzlackschicht auf die metallische Beschichtung und die Kunststofffolie, worauf die derart beschichteten Folie oder Laminate gestanzt oder ausgeschnitten und durch Pressformen in die gewünschte Form gebracht werden und in eine Spritzgussform eingebracht werden.

2. Verfahren nach Anspruch 1, **dadurch gekennzeichnet, dass** die metallische Beschichtung opak ist.

3. Verfahren nach Anspruch 1, **dadurch gekennzeichnet, dass** die metallische Beschichtung zumindest teilweise lichtdurchlässig ist.

4. Verfahren nach einem der Ansprüche 1 bis 3, **dadurch gekennzeichnet, dass** die Dekorfolie mit der Trägerfolie durch ein 2-Komponenten-Klebesystem verbunden ist.

5. Verfahren nach einem der Ansprüche 1 bis 4 **dadurch gekennzeichnet, dass** die Schutzlackschicht bedruckbar ist.

6. Verfahren nach einem der Ansprüche 1 bis 5, **dadurch gekennzeichnet, dass** die Dicke der metallischen Beschichtung an die Verformung und an das Design angepasst ist.

7. Verwendung der nach einem Verfahren nach einem der Ansprüche 1 bis 6 hergestellten hinterspritzbaren Folien oder Laminate zur Herstellung von dekorierten Spritzgussteilen, **dadurch gekennzeichnet, dass** die verformten, gestanzten oder ausgeschnittenen Folien oder Laminate in eine Spritzgussform eingebracht und hinterspritzt werden.

8. Verwendung der Folien bzw. Laminate hergestellt nach einem der Ansprüche 1 bis 6 für Gebrauchsgegenstände, Haushaltsgeräte, Spielwaren, Sportartikel und für Kfz-Teile.

## Claims

1. Process for the production of laminates or foils which can be subjected to an insert-moulding procedure, **characterized in that** a partial or full-surface metallic coating is applied by means of a PVD or CVD process to a plastics foil, where the thickness of the metallic coating is variable, and then a UV-crosslinkable protective-coating layer is applied to the metallic coating and the plastics foil, and then the foils or laminates thus coated are subjected to a punching or cutting-out procedure and are converted by press moulding to the desired shape and are introduced into an injection mould.

2. Process according to Claim 1, **characterized in that** the metallic coating is opaque.

3. Process according to Claim 1, **characterized in that** the metallic coating is at least to some extent permeable to light.

4. Process according to any of Claims 1 to 3, **characterized in that** the decorative foil has been bonded to the backing foil by a two-component adhesive system.

5. Process according to any of Claims 1 to 4, **characterized in that** the protective-coating layer is printable

6. Process according to any of Claims 1 to 5, **characterized in that** the thickness of the metallic coating is appropriate for the shape and for the design.

7. Use, for the production of decorated injection mouldings, of the laminates or foils which can be subjected to an insert-moulding procedure and have been produced by a process according to any of Claims 1 to 6, **characterized in that** the moulded, punched or cut-out foils or laminates are introduced into an injection mould and are subjected to an insert-moulding procedure.

8. Use, for consumer products, household equipment, toys, sports items or motor-vehicle parts, of the foils or laminates produced according to any of Claims 1 to 6.

## Revendications

1. Procédé de fabrication de feuilles ou laminés injectables par l'arrière, **caractérisé en ce que** sur une feuille plastique un revêtement métallique partiel ou sur toute la surface est appliqué au moyen d'un procédé PVD ou CVD, dans lequel le revêtement métallique présente une épaisseur variable, l'application consécutive d'une couche de laque de protection réticulable par UV sur le revêtement métallique et la feuille plastique, sur quoi la feuille ou le laminé revêtu de la sorte sont estampés ou découpés et sont amenés par formage par pressage à la forme souhaitée et sont introduits dans un moule de moulage par injection.

2. Procédé selon la revendication 1, **caractérisé en ce que** le revêtement métallique est opaque.

3. Procédé selon la revendication 1, **caractérisé en ce que** le revêtement métallique est perméable à la lumière au moins partiellement.

4. Procédé selon l'une des revendications 1 à 3, **caractérisé en ce que** la feuille décorative est raccordée à la feuille de support par un système de colle à 2 composants.

5. Procédé selon l'une des revendications 1 à 4, **caractérisé en ce que** la couche de laque de protection est imprimable.

6. Procédé selon l'une des revendications 1 à 5, **caractérisé en ce que** l'épaisseur du revêtement métallique est adaptée à la déformation et à la conception.

7. Utilisation des feuilles ou laminés injectables par l'arrière fabriqués selon un procédé selon l'une des revendications 1 à 6 pour la fabrication de parties moulées par injection décorées, **caractérisée en ce que** les feuilles ou laminés déformés, estampés ou découpés sont introduits et injectés par l'arrière dans un moule d'injection.

8. Utilisation des feuilles ou laminés fabriqués selon l'une des revendications 1 à 6 pour des objets utilitaires, appareils ménagers, jouets, articles de sport et pièces automobiles.
